# EUROPÄISCHE PATENTANMELDUNG

(11) **EP 2 567 608 A1**
(43) Veröffentlichungstag der Anmeldung: **13.03.2013**
(21) Anmeldenummer: 12182317.3
(22) Anmeldetag: 30.08.2012
(51) Int. Cl.: A01D 89/00, A01D 90/02

(54) **Vorrichtung für eine landwirtschaftliche Maschine**

(30) Priorität: 07.09.2011 DE 102011053353
(71) Anmelder: Reiter, Thomas, 4707 Schlüsselberg (AT)
(72) Erfinder: Reiter, Thomas, 4707 Schlüsselberg (AT)
(74) Vertreter: Borchert, Uwe Rudolf

(57) **Zusammenfassung**

Die Erfindung betrifft eine Vorrichtung (1) für eine landwirtschaftliche Maschine zur Förderung von Erntegütern unterschiedlicher Art, die im Wesentlichen aus einer Mehrzahl distanzierter auf einer Achse (17) oder einer Antriebswelle (27) angeordneter Mitnehmerscheiben (24) und/oder Gruppen von Mitnehmerscheiben (24) besteht. Eine solche Vorrichtung (1) kann bei einer landwirtschaftlichen Maschine als Schwader oder Bandschwader oder Heuwerbungsmaschine oder Fahrgassenräumer oder Schwadräumer oder dergleichen für die Bearbeitung von Erntegut schonend eingesetzt werden.

## Beschreibung

Die Erfindung betrifft eine Vorrichtung für eine landwirtschaftliche Maschine gemäß der im Oberbegriff des Anspruches 1 angegebenen Art.

Mit der DD 216 156 A1 ist eine Zinkensteuerung für eine Heuwerbungsmaschine bekannt geworden. Bei dieser Heuwerbungsmaschine sind zwischen Kurbelarmen und Trommelarmen Federelemente eingebaut, die die Kurbelarme gegen Anschläge pressen und die Zinken somit radial nach außen stellen. Die Zinken bestehen dabei aus einem Federstahl mit rundem Querschnitt.

Gleichfalls sind Rechen für eine Heuwerbungsmaschine, mit einer Vielzahl von an einem Zinkenträger befestigter Federzinken der DE 20 2005 020 005 U1 zu entnehmen. Dabei sind zwei Gruppen von Zinken entlang eines Außenabschnitts des Zinkenträgers jeweils in einer Reihe nebeneinander angeordnet. Die Zinken der zweiten Gruppe sind so geformt und ausgerichtet, dass zumindest ihre freien Endabschnitte von den freien Endabschnitten der Zinken der ersten Gruppe einen Abstand in Bezug auf die Umfangsrichtung eines um die Längsachse des Außenabschnitts des Zinkenträgers verlaufenden Kreises aufweisen.

Hieraus wird deutlich, dass aus dem Stand der Technik ausschließlich Rechwerkzeuge bekannt sind, die als Federzinken, d. h. aus ruhendem Material vorzugsweise mit einer Federeinrichtung bestehen, eingesetzt werden.

Wie der Stand der Technik zeigt, ist es üblich, dass heutzutage bei Schwadeinrichtungen bzw. Heuwerbungsmaschinen oder Mergern ausschließlich zur Recharbeit derartige Vorrichtungen verwendet werden, die mit den vor beschriebenen Einzelzinken ausgestattet sind. Liegt eine zu schwadende Futtermatte auf einer Grasnarbe, beispielsweise bei einer Mähhöhe von ca. 50 mm bis 75 mm, so wird die am Boden liegende Futtermasse einer bestimmten Dicke sehr unterschiedlich mechanisch und dynamisch durch die Zinken beansprucht. Dabei leisten derartige Vorrichtungen bei der Recharbeit nicht unter allen Einsatzverhältnissen befriedigende Ergebnisse. Dies liegt daran, dass vor allem kurzes Erntegut in einem großen Maße nicht aufgehoben sondern vor sich her geschoben wird. Ferner weisen derartige Einrichtungen in der Regel zwischen zwei benachbarten Zinken, vor allem in Umfangsrichtung am Zinkenflugkreis, sehr große Lücken auf, was wiederum dazu führt, dass das Erntegut nur schubweise gefördert wird. Bei landwirtschaftlichen Maschinen dieser Art treten bei trockenem Erntegut zudem große Blattverluste auf.

Die Aufgabe der Erfindung besteht darin, die Vorrichtung für eine landwirtschaftliche Maschine gemäß der im Oberbegriff des Anspruches 1 angegebenen Art derart weiterzubilden, dass die genannten Nachteile des aufgeführten Standes der Technik vermieden werden. Es soll eine Vorrichtung für eine landwirtschaftliche Maschine zur Förderung von Erntegut geschaffen werden, deren Leistungsfähigkeit und Arbeitsqualität ein wesentlich verbessertes Ergebnis liefert. Mit einer derartigen Vorrichtung soll sowohl eine möglichst verlustfreie Aufnahme von Erntegut von der Bodenoberfläche als auch beispielsweise ein Weitertransport des bereits geförderten Erntegutes ohne große Blatt- und Bröckelverluste erreicht werden.

Die Aufgabe der Erfindung wird durch die kennzeichnenden Merkmale des Anspruches 1 in Verbindung mit seinen Oberbegriffsmerkmalen gelöst.

Die Unteransprüche, geben weitere Ausgestaltungen des erfindungsgemäßen Gedankens wieder.

Die Erfindung schlägt eine Lösung für eine Vorrichtung einer landwirtschaftlichen Maschine zur Förderung von Erntegut unterschiedlichster Art in der Weise vor, dass auf einer Achse oder Antriebswelle aus einer Mehrzahl distanziert angeordneter Mitnehmerscheiben und/oder einer Mehrzahl von Gruppen von Mitnehmerscheiben eine Vorrichtung entsteht, die in der Lage ist, dass Erntegut von der Bodenoberfläche auch in unterschiedlichster Höhe schonend und ohne Blatt- und Bröckelverluste aufzuheben. Dieses bedeutet, dass die erfindungsgemäße Vorrichtung gänzlich auf die üblicherweise verwendeten Stahlzinken mit federnder Wicklung verzichtet. Dieses hat zur Folge, dass die erfindungsgemäße Vorrichtung in ihrem Durchmesser wesentlich kleiner sein kann.

Entgegen den üblichen, federbelasteten Zinken aus dem Stand der Technik werden erfindungsgemäß Mitnehmerscheiben verwendet, die keinerlei Federelemente im Sinne des Standes der Technik enthalten. Derartige Mitnehmerscheiben können im Wesentlichen starr ausgebildet und verdreh gesichert auf der Achse bzw. der Antriebswelle gelagert sein und können hydraulisch oder mechanisch oder elektrisch angetrieben werden. Die Anordnung der mit den Mitnehmerscheiben und/oder den Gruppen von Mitnehmerscheiben bestückten Achse oder Antriebswelle kann sowohl in vertikaler als auch in horizontaler Richtung erfolgen. Dabei versteht es sich, dass die Drehgeschwindigkeit der Antriebswelle bzw. der Achse veränderbar durch die Antriebsart ausführbar ist.

Gemäß einer Ausführungsform der Erfindung sind die Mitnehmerscheiben oder die Gruppe von Mitnehmerscheiben mittels einer Überlastsicherung auf der Achse oder der Antriebswelle verdrehsicher gelagert. Bei Auftreten von Fremdkörpern kann es zu hohen Belastungen kommen, welche die Überlastsicherung aktivieren, indem die Mitnehmnerscheiben bzw. die Gruppe von Mitnehmerscheiben relativ zur Achse oder der Antriebswelle drehen. Hierdurch wird die Fördervorrichtung vor Beschädigung geschützt.

Vorzugsweise sind die Mitnehmerscheiben einer Gruppe über eine Nabe miteinander verbunden. Hierduch kann eine einfache stabile Verbindung der Mitnehmerscheiben zu einer Gruppe gewährleistet werden.

Die Mitnehmerscheibe weist im Wesentlichen eine kreisrunde Form auf. Auf einem Grundkörper sind Mitnehmer zahnförmig oder sternförmig oder dergleichen angeordnet. Dieses bedeutet, dass an dem Grundkörper auf seinem Umfang in einer mehrfachen Anzahl Mitnehmer platziert sind, wobei jeweils zwischen zwei benachbarten Mitnehmern ein Freiraum vorhanden ist. Diese einzelnen Mitnehmer, die von einem Grund ausgehend nach außen sich verjüngen, haben die Eigenschaft, dass aus jeder Stoppelhöhe eine schonende Aufhebung und damit verlustfreie Beförderung des Erntegutes möglich ist. Dabei kann die Wirkung zur Aufnahme des Erntegutes noch dadurch erhöht werden, dass den einzelnen Mitnehmern bestimmte Formen bzw. Winkelstellungen zugeordnet werden. Je kleiner der Durchmesser ist, desto schonender ist die Aufnahme des Erntegutes. Dieses hat zur Folge, dass ein Mitnehmerspitzenwinkel relativ zur Rotationsachse der Fördereinrichtung im Wesentlichen deutlich nacheilender sein kann als dies beim Stand der Technik der Fall ist und trotzdem wird das Erntegut sehr gut aus der Stoppelhöhe hoch gefördert. Nachdem das Erntegut aus der Grasnarbe bzw. von der Bodenoberfläche aufgenommen worden ist, wird es durch Abstreifer von den einzelnen Mitnehmern entfernt und so perfekt von den Mitnehmern getrennt. Durch eine derartige Ausgestaltung der Mitnehmerscheiben wird eine solche Vorrichtung der landwirtschaftlichen Art sehr einfach und beinhaltet auch nur geringe Wartungskosten. Dieses bedeutet auch, dass die Mitnehmer einzeln beispielsweise bei einer Beschädigung ausgetauscht werden können.

Die einzelnen Mitnehmer weisen in einer bevorzugten Ausführungsform einen verstärkten Fuß auf, von dem seitlich eine vordere und eine hintere Flanke ausgehen, die sich in einer Mitnehmerspitze treffen. Dabei ist es möglich, je nach Anwendung die vordere und die hintere Flanke im Wesentlichen gleich oder aber auch ungleich auszubilden. In der einfachsten bevorzugten Form haben sowohl die fordere als auch die hintere Flanke einen im Wesentlichen leicht gebogenen Verlauf, beispielsweise die Form eines Zahnes, wie diese bei Zahnrädern bekannt ist.

In einer weiteren bevorzugten Ausführungsform kann die vordere Flanke einen konvexen und die hintere Flanke einen konkaven Verlauf aufweisen. Diese besondere Ausführungsform beinhaltet Vorteile der Art, nämlich dass sich ein größerer Raum zwischen zwei aufeinander folgender Mitnehmer auf einer Scheibe ausbildet, der für das aufnehmende Erntegut nun zur Verfügung steht. Darüber hinaus ermöglicht der größere verfügbare Zwischenraum eine optimale elastische Verformung im Falle eines Fremdkörperkontaktes.

Je kleiner eine solche Mitnehmerscheibe in ihrem Durchmesser ausgebildet ist, desto besser ist die Aufnahme des Erntegutes, weil die einzelnen Mitnehmer nicht so intensiv gegen den Strich arbeiten wie die Zinken beim Stand der Technik. Dies hat zur Folge, dass eine derartige Futtermatte nicht so stark, wie es beim Stand der Technik der Fall ist, eine Verformung erfährt, was wiederum dazu führt, dass durch die erfindungsgemäße Vorrichtung wesentlich geringere Bröckel- oder Blattverluste auftreten.

Des Weiteren ist es so, dass bei einem geringen Durchmesser der Mitnehmerscheibe auch eine wesentlich einfachere Umlenkung des Futterteppichs bei der Aufnahme aus der Grasnarbe möglich ist. Dieses bedeutet, dass die kinetische Energie des Erntegutstromes durch die Arbeitsgeschwindigkeit der landwirtschaftlichen Maschine nicht am Abstreifer vernichtet wird. Dieses schlägt sich vor allem in einem sehr homogenen Gutfluss des aufgenommenen Erntegutstromes nieder.

Aufgrund der vielfältigen Einsatzmöglichkeiten einer solchen landwirtschaftlichen Vorrichtung ist es möglich, dass die Mitnehmerscheiben aus unterschiedlichen Materialien hergestellt werden, um so für verschiedene Erntegüter einen optimalen Einsatz zu gewährleisten. Dabei können die Mitnehmerscheiben aus Stahl oder Federstahl oder Leichtmetall oder Kunststoff oder einem Verbundmaterial oder aus mindestens zwei unterschiedlichen Materialien bestehen. Eine solche Ausführung mit zwei verschiedenen Materialien könnte dann z.B. im "Kern" hart und die einzelnen Mitnehmer würden aus einem Material mit erhöhter Elastizität bestehen, d.h. nachgiebig sein. Dieses erlaubt auch einen Kontakt mit Steinen oder dergleichen, ohne dass hier gleich ein Bruch der Mitnehmer an den Mitnehmerscheiben sich vollzieht.

Da die wirksamen Kräfte auf die Mitnehmer, aufgrund der im Vergleich zum Stand der Technik sehr viel kleineren Flugkreise, und der dadurch deutlich geringeren Massenkräfte aus dem Erntegutstrom, erheblich geringer sind, können die Mitnehmer weicher ausgebildet werden. Die direkte Folge daraus ist, dass diese weicheren Mitnehmer deutlich weniger Steine und Schmutz in das Erntegut eintragen, da die statischen und dynamischen Kräfte von Mitnehmern bei Bodeneingriffen bzw. bei auf am Feld liegenden Fremdkörpern wie Steine oder dergleichen wesentlich geringer ausfallen, und damit Schmutz und Steine deutlich weniger hochgeschleudert werden. Dies liefert eine erheblich höhere Qualität des Erntegutes.

Es versteht sich, dass auch die einzelnen Mitnehmer auf den Mitnehmerscheiben seitlich verschränkt ausgebildet sein können. Ferner ist eine Herstellung aus Stahl oder Federstahl oder Edelstahl oder Leichtmetall oder Kunststoff oder einem Verbundmaterial oder dergleichen möglich.

Die landwirtschaftliche Vorrichtung besteht dabei im Wesentlichen aus einer Mehrzahl distanziert auf der Antriebswelle angeordneter Mitnehmerscheiben. Dabei sind zwei benachbarte Mitnehmerscheiben vorzugsweise so montiert, dass die Mitnehmer versetzt zueinander angeordnet sind. Dadurch entstehen keine großen Lücken, wie es beispielsweise beim Stand der Technik mit den einzelnen Rechen der Fall ist, und der Erntegutstrom wird deutlich homogener.

Gemäß einer weiteren Ausführungsform der Erfindung kann die Mitnehmerscheibe oder die Gruppe von Mitnehmerscheiben geteilt ausgeführt sein. Durch einfaches Verschrauben mit der Antriebswelle wird die Mitnehmerscheibe bzw. die Gruppe von Mitnehmerscheiben auf der der Antriebswelle miteinander verbunden und verdrehsicher auf dieser gelagert. Bei der Gruppe von Mitnehmerscheiben kann auch die geteilt sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: einen Vergleich einer erfinderischen Vorrichtung mit einer Vorrichtung aus dem Stand der Technik;
- Fig. 2: eine erste bevorzugte Ausführungsform einer Fördervorrichtung;
- Fig. 3: eine bevorzugte Ausführungsform einer Mitnehmerscheibe;
- Fig. 4: eine weitere bevorzugte Ausführungsform einer Mitnehmerscheibe;
- Fig. 5: eine weitere bevorzugte Ausführungsform einer Mitnehmerscheibe;
- Fig. 6: zwei benachbarte Mitnehmerscheiben, die versetzt zueinander angeordnet sind;
- Fig. 7: eine Ausführungsform einer Fördervorrichtung;
- Fig. 8: eine erste Darstellung einer Gruppe von Mitnehmerscheiben;
- Fig. 9: eine zweite Darstellung einer Gruppe von Mitnehmerscheiben, und
- Fig. 10: eine dritte Darstellung einer Gruppe von Mitnehmerscheiben.

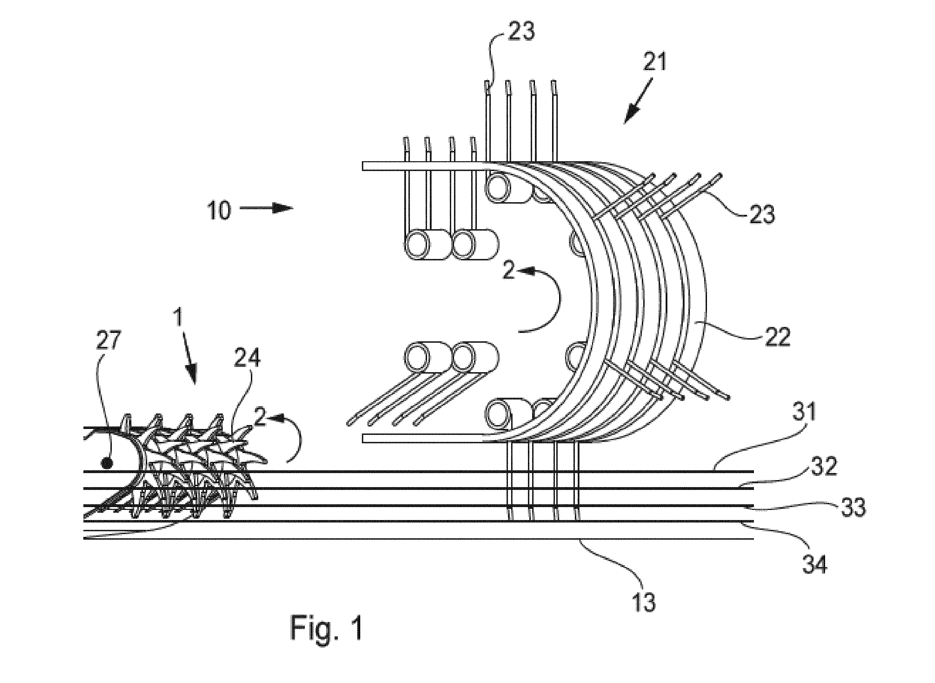

Durch die Figur 1 wird ein typischer Größenvergleich des zum Stand der Technik gehörenden Rechwerkes 21, mit einer erfindungsgemäßen Fördervorrichtung deutlich gemacht. Es werden bei dem Rechwerk 21 einzelne Zinken 23 verwendet, die federelastisch sind und die Recharbeiten ausführen. Dabei wird deutlich, dass das durch die Zinken 23 aufgenommene Rechgut im bodennahen Bereich mehr geschoben als aufgehoben wird. Durch die zwischen den einzelnen Zinken 23 vorhandenen Abstreifer 22 wird das aufgenommene und auf den Zinken 23 verbleibende Rechgut weiter befördert. Mit den Bezugszeichen 31, 32, 33, 34 sind gegenüber einer Bodenoberfläche 13 verschiedene Stoppelhöhen schematisch angedeutet worden.

Betrachtet man die erfindungsgemäße Vorrichtung 1 zur Förderung von Erntegütern unterschiedlichster Art neben dem beschriebenen Rechwerk 21, so wird neben dem Größenvergleich ferner deutlich, dass eine Vielzahl von Mitnehmerscheiben 24 auf einer Antriebswelle 27 drehgelagert montiert sind. Beide Fördervorrichtungen 1 und 21 bewegen sich in Fahrtrichtung 10 und weisen dabei in diesem Ausführungsbeispiel eine Drehrichtung 2, die entgegen dem Uhrzeigersinn verläuft, auf.

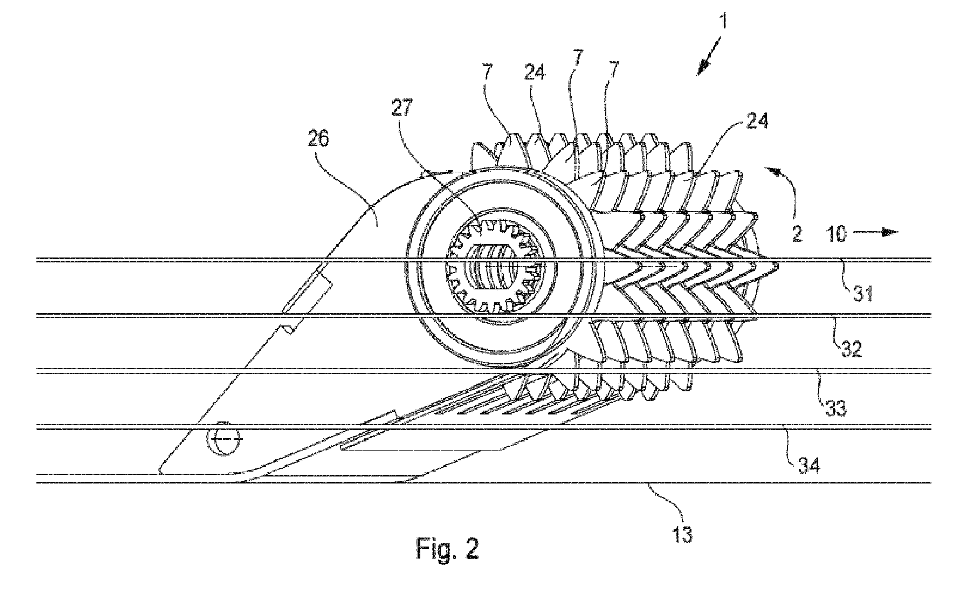

Gemäß der Figur 2 wird eine erste bevorzugte mögliche Ausführungsform der Fördervorrichtung 1, die an einer landwirtschaftlichen Maschine zur Förderung von Erntegut unterschiedlichster Art eingesetzt werden kann, wiedergegeben. Die Verwendung der Mitnehmer 24 auf einer Antriebswelle 27 ist nicht auf diese Ausführungsart beschränkt. An einer Halterung 26 ist über ein Lager 30 die Antriebswelle 27 dargestellt. Auf der Antriebswelle 27 sind distanziert durch Abstandshalter einzelne Mitnehmerscheiben 24 montiert. Dabei sind die Mitnehmerscheiben 24 vorzugsweise so montiert, dass in einer Lücke von zwei seitlich benachbarten Mitnehmerscheiben 24 jeweils ein Mitnehmer 7 platziert ist. Auch aus dieser Ansicht der Figur 2 kann deutliche entnommen werden, dass eine schonende Aufnahme des Erntegutes aus den unterschiedlichen Stoppelhöhen 31, 32, 33, 34 erfolgen kann. Es versteht sich, dass eine derartige Fördervorrichtung 1 in ihrer Arbeitshöhe, d. h. zur Bodenoberfläche 13 in Stufen bzw. kontinuierlich verstellbar ist.

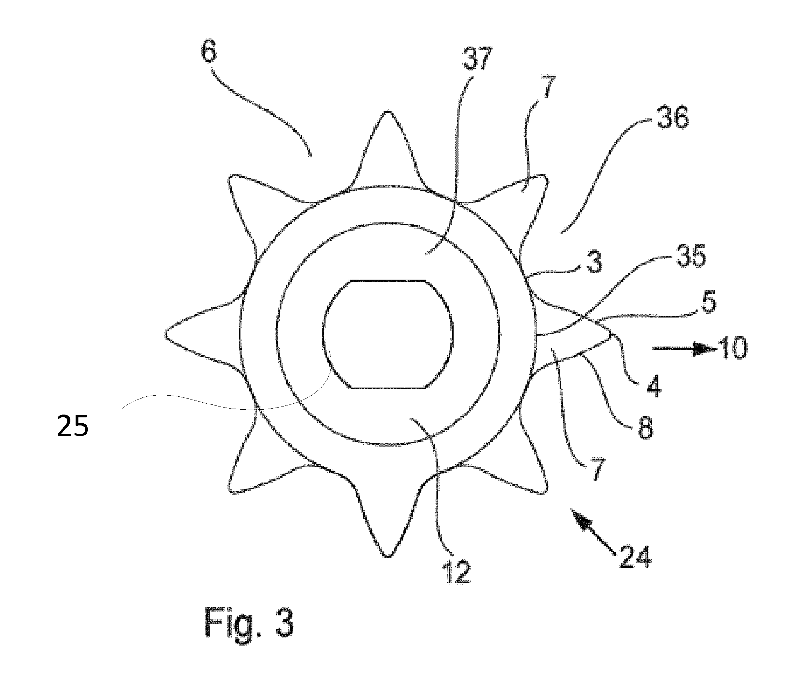

In einer Einzeldarstellung gemäß der Figur 3 ist exemplarisch eine bevorzugte Ausführungsform einer Mitnehmerscheibe 24 wiedergegeben worden. Die Mitnehmerscheibe 24 wird über eine Antriebswellenaufnahme 25 auf der hier nicht dargestellten Antriebswelle 27 montiert.

Die Mitnehmerscheibe 24 ist im Wesentlichen aus einem kreisrunden Grundkörper 12, der einen Bund 37, der auch gleichzeitig Fußkreisdurchmesser 3 sein kann, konstruiert. Der Bund 37 kann dabei gleichzeitig zur Distanzierung benachbarter Mitnehmerscheiben 24 auf der Achse 17 oder der Antriebswelle 27 dienen, wenn er stärker ausgeführt wir als die Mitnehmer 7.

Bei der Betrachtung eines einzelnen Mitnehmers 7 der Mitnehmerscheibe 24 wird deutlich, dass ausgehend von einem Fuß 35 eine vordere Flanke 5 und eine hintere Flanke 8 vorhanden sind, die sich in einer nach außen gerichteten Mitnehmerspitze 4 treffen. In dem Ausführungsbeispiel sind sowohl die vordere Flanke 5 als auch die hintere Flanke 8 gleich ausgebildet und weisen einen gebogenen Verlauf auf. Zwischen zwei benachbart angeordneter Mitnehmer 7 befindet sich eine Lücke 36, 6, die dazu dient, das aufgenommene Erntegut festzuhalten und gleichzeitig auch durch die Rotationsbewegung der Drehrichtung 2 weiter zu befördern.

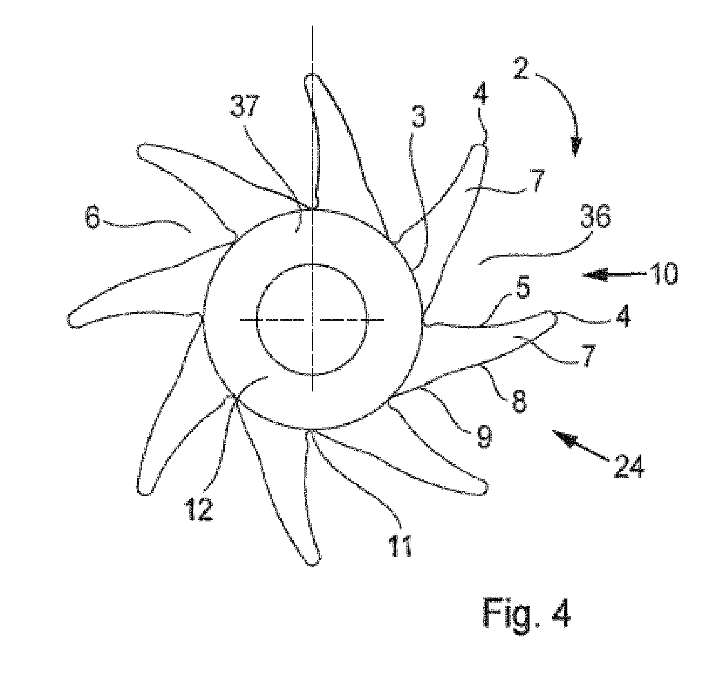

In einer weiteren bevorzugten Ausführungsform der Figur 4 ist die Mitnehmerform 7 anders gestaltet worden. Die vordere Flanke 8 ist bei dieser Ausführungsform als konvexer Linienverlauf dargestellt. Dagegen weist die rückseitige Flanke 5 einen konkaven Verlauf auf. Zur Stärkung des Mitnehmers 7 ist im vorderseitigen Bereich der Flanke 8 eine Verstärkung 9 vorhanden. Damit wird der zahnförmige Mitnehmer 7 gestärkt, da die Verstärkung 9 sich nur im Fuß 35 der vorderseitigen Flanke 8 befindet. Zwischen zwei benachbarten Mitnehmern 7 ist auch hier ein Freiraum 36 vorhanden, dessen Funktion hier noch deutlicher wird, als bei dem Ausführungsbeispiel der Figur 3. Durch die in der Figur 4 gezeigte Form des Mitnehmers 7 unter Angabe der Drehrichtung 2 kann hier die Funktion einer Schaufel oder dergleichen deutlich werden, der in seiner Nachgiebigkeit beispielsweise optimal an die Ernteverhältnisse angepasst werden kann. Durch den sich öffnenden Freiraum 36 ist genügend Raum vorhanden, um einerseits das entsprechend aufgenommene Erntegut weiter zu transportieren und andererseits den erforderlichen Freiraum für elastische Verformung der Mitnehmer 7 bereit zu stellen.

Bei dieser Ausführungsform der Figur 4 ist es möglich, dass die Mitnehmerscheibe 24 einen Grundkörper 12 aufweist, der beispielsweise eine größere Härte aufweist und aus einem anderen Material bestehen kann als die äußeren beabstandeten Mitnehmer 7. Eine derartige Mitnehmerscheibe 24 kann beispielsweise auch aus Kunststoff oder einem Verbundmaterial oder dergleichen hergestellt werden.

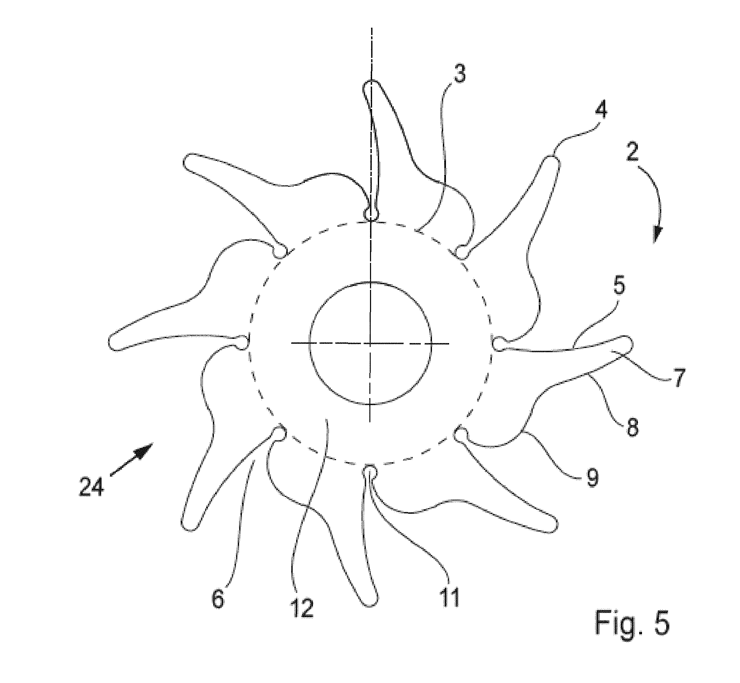

In der Figur 5 wird in einem bevorzugten Ausführungsbeispiel eine weitere modifizierte Form des Mitnehmers 7 wiedergegeben. Dieser Mitnehmer 7 weist eine wesentlich verstärkte vorderseitige Flanke 8 durch die Verstärkung 9 auf. Am Ende der Verstärkung 9 sind Freischnitte 11 vorhanden. Eine derartige Ausführung eines Mitnehmers 24 kann beispielsweise auch aus einem plattenförmigen Material heraus geschnitten werden. Dieses könnte mit Laser oder Wasserstrahl geschehen und als Material kann beispielsweise Aluminium, Stahl, Edelstahl oder dergleichen zur Anwendung kommen.

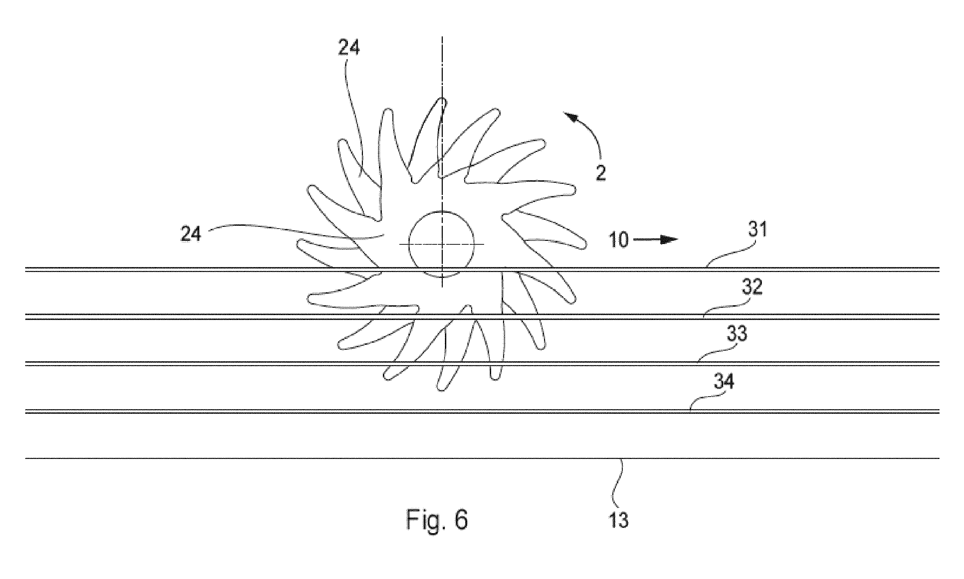

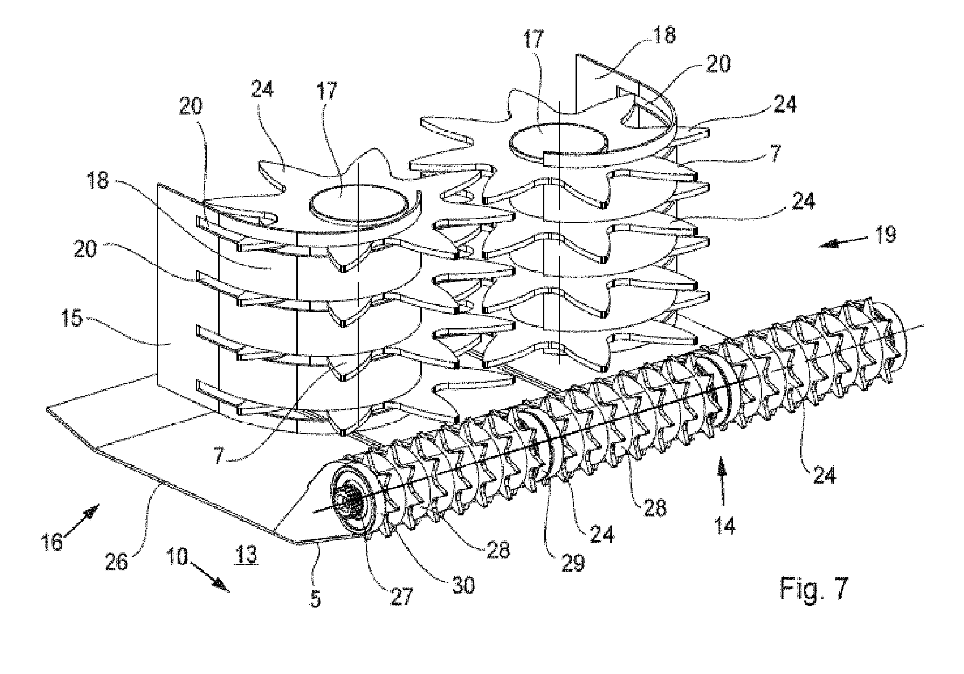

Durch die Figur 6 soll noch einmal verdeutlicht werden, dass eine derartige Mitnehmerscheibe 24 in distanzierter Form für unterschiedliche Rechhöhen und damit Stoppelhöhen 31, 32, 33, 34 ohne Probleme einsetzbar ist. In der Figur 7 wird in einer möglichen Ausführungsform eine landwirtschaftliche Maschine wiedergegeben, bei der die zuvor beschriebenen Mitnehmerscheiben 24 in unterschiedlichen landwirtschaftlichen Vorrichtungen eingesetzt werden. Dabei ist eine dort gezeigte landwirtschaftliche Vorrichtung 16 sowohl mit einer horizontal arbeitenden Fördervorrichtung 14 als auch mit vertikal arbeitenden Fördervorrichtungen 19 ausgestattet. Eine derartige Vorrichtung 16 kann gleichzeitig zum Aufnehmen des Erntegutes durch die Fördervorrichtung 14 und deren seitlichen Abtransport zu Schwaden über die Fördervorrichtung 19 eingesetzt werden.

Auf der Antriebswelle 27 sind durch die Lager 30 gelagert die einzelnen vor beschriebenen Mitnehmerscheiben 24 beabstandet eingesetzt worden. Aufgrund der Länge der Antriebswelle 27 sind hier auch in einem gewissen Abstand Zwischenlager 29 eingesetzt. Damit das aufgenommene Erntegut auch abgestreift werden kann, befindet sich zwischen den benachbarten Mitnehmerscheiben 24 jeweils ein Abstreifer 28. Das so schonend aufgenommene Erntegut über die Fördervorrichtung 14 wird der nachfolgenden vertikalen Fördervorrichtung 19, die aus zwei nebeneinander angeordneten Fördervorrichtungen besteht, zugeführt. Diese Fördervorrichtungen 19 sind im Prinzip analog der Fördervorrichtung 14 aufgebaut, so dass auf der Achse 17 die einzelnen Mitnehmerscheiben 24 distanziert gelagert sind. Innerhalb eines Gehäuses 15 befinden sich die Achsen 17, wobei das Gehäuse 15 Durchbrüche 20 aufweist, damit die einzelnen Mitnehmer 7 ihre Recharbeit verrichten können. Zwischen den benachbarten Mitnehmerscheiben 24 sind auch hier Abstreifer 18 vorhanden. Bei diesem Ausführungsbeispiel der Fördervorrichtung 19 ist es möglich, dass das aufgenommene Erntegut sowohl zu linken als auch zur rechten Seite zu Schwaden abgelegt wird.

Funktionsentscheidend für den optimalen Einsatz der vorgenannten Mitnehmerscheiben 24 bei einer landwirtschaftlichen Maschine ist eine weitestgehende konstante Führung gegenüber der Bodenoberfläche 13.

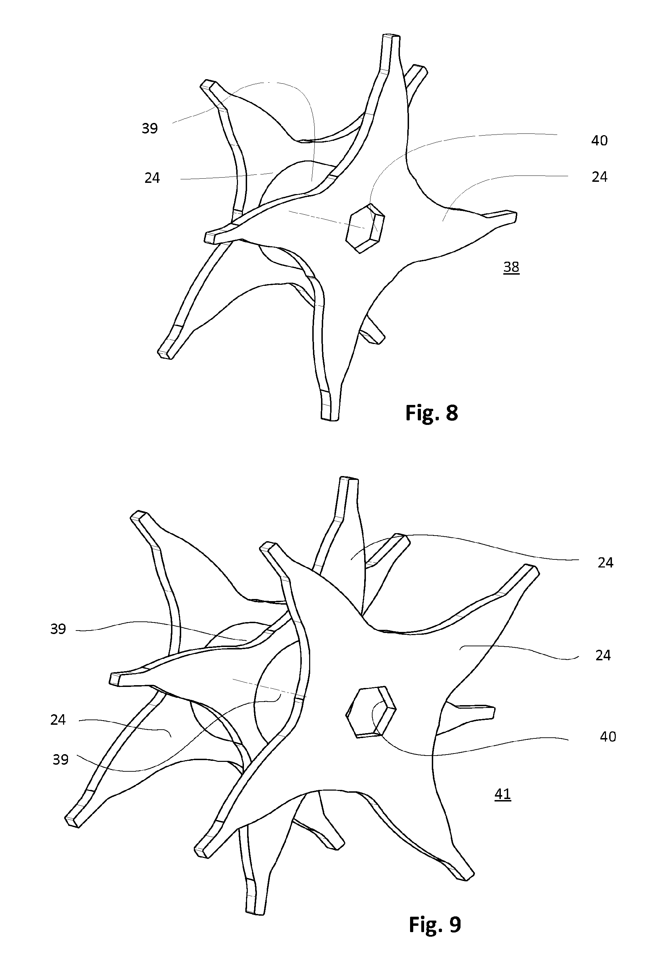

In Fig. 8 ist eine erste Ausführungsform einer Gruppe 38 in einer perspektivischen Ansicht dargestellt. Die Gruppe 38 ist mit zwei Mitnehmerscheiben 24 versehen, welche durch eine Nabe 39 miteinander verbunden sind. Die Mitnehmerscheibe 24 weist jeweils ein Mehrkantprofil aufweisende Antriebswellenaufnahme 40 auf, die dem Profil der zugehörigen Antriebswelle 27 oder Achse 17 angepasst ist. Die Gruppe 38 wird auf die Antriebswelle 27 aufgeschoben oder bei geteilter aufgeschraubt und ist darüber in Drehrichtung formschlüssige fixiert. Neben der Gruppe 38 können weitere Gruppen 38 und/oder Mitnehmerscheiben 24 auf die Antriebswelle 27 oder die Achse 17 aufgeschoben werden.

In Fig. 9 ist eine zweite Ausführungsform einer Gruppe 41 in einer entsprechenden perspektivischen Ansicht dargestellt. Die Gruppe 41 ist mit drei Mitnehmerscheiben 24 versehen, welche durch eine Nabe 39 miteinander verbunden sind. Die Mitnehmerscheibe 24 weist jeweils ein Mehrkantprofil aufweisende Antriebswellenaufnahme 40 auf, die dem Profil der zugehörigen Antriebswelle 27 oder Achse 17 angepasst ist. Die Gruppe 41 wird auf die Antriebswelle 27 aufgeschoben und ist darüber in Drehrichtung formschlüssige fixiert. Neben der Gruppe 41 können weitere Gruppen 38, 41 und/oder Mitnehmerscheiben 24 auf die Antriebswelle 27 oder die Achse 17 aufgeschoben werden.

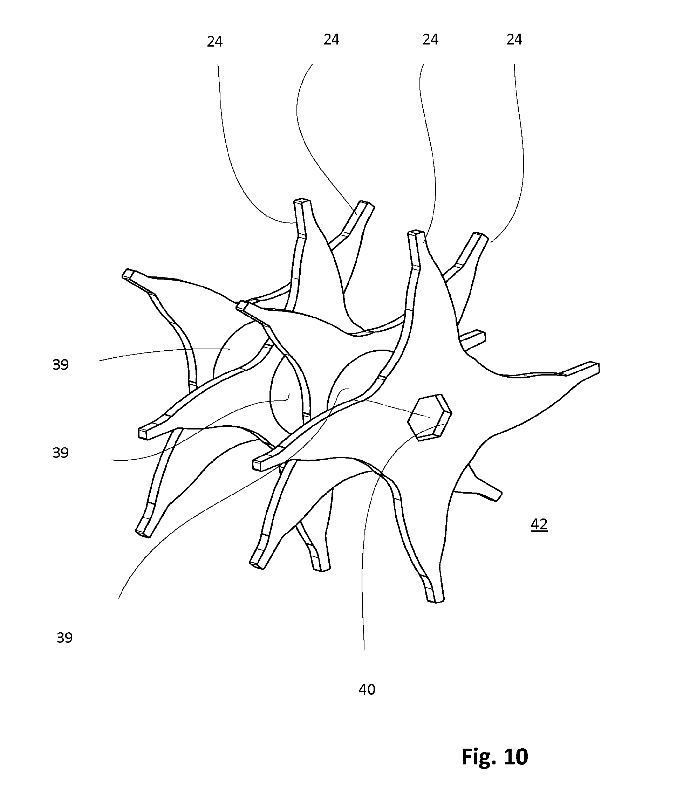

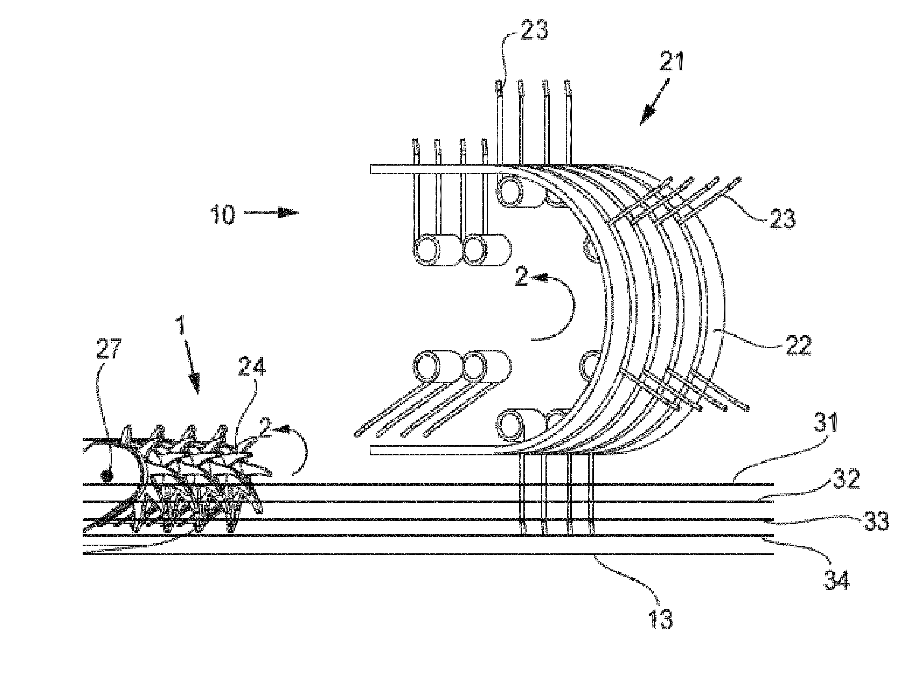

In Fig. 10 ist eine dritte Ausführungsform einer Gruppe 42 in einer entsprechenden perspektivischen Ansicht dargestellt. Die Gruppe 42 ist mit vier Mitnehmerscheiben 24 versehen, welche durch eine Nabe 39 miteinander verbunden sind. Die Mitnehmerscheibe 24 weist jeweils ein Mehrkantprofil aufweisende Antriebswellenaufnahme 40 auf, die dem Profil der zugehörigen Antriebswelle 27 oder Achse 17 angepasst ist. Die Gruppe 42 wird auf die Antriebswelle 27 aufgeschoben und ist darüber in Drehrichtung formschlüssige fixiert. Neben der Gruppe 42 können weitere Gruppen 38, 41, 42 und/oder Mitnehmerscheiben 24 auf die Antriebswelle 27 oder die Achse 17 aufgeschoben werden.

Analog den vorherbeschriebenen Ausführungsformen von Gruppen 38, 41, 42 kann eine Gruppe auch mehrere Mitnehmerscheiben 24 aufweisen, welche über eine Nabe 39 jeweils miteinander verbunden sind und auf die Antriebswelle 27 oder einer gemeinsamen Achse 17 aufschiebbar sind.

### Bezugszeichenliste

- 1: Fördervorrichtung
- 2: Drehrichtung
- 3: Fußkreisdurchmesser
- 4: Mitnehmerspitze
- 5: Hinterflanke
- 6: Lücke
- 7: Mitnehmer
- 8: Vorderflanke
- 9: Verstärkung
- 10: Fahrtrichtung
- 11: Freischnitt
- 12: Grundkörper
- 13: Bodenoberfläche
- 14: Fördervorrichtung
- 15: Gehäuse
- 16: landwirtschaftliche Vorrichtung
- 17: Achse
- 18: Abstreifer
- 19: Fördervorrichtung
- 20: Durchbruch
- 21: Rechwerk
- 22: Abstreifer
- 23: Zinken
- 24: Mitnehmerscheibe
- 25: Antriebswellenaufnahme
- 26: Halterung
- 27: Antriebswelle
- 28: Abstreifer
- 29: Zwischenlager
- 30: Lager
- 31: Stoppelhöhe
- 32: Stoppelhöhe
- 33: Stoppelhöhe
- 34: Stoppelhöhe
- 35: Fuß
- 36: Freiraum
- 37: Bund
- 38: Gruppe von zwei Mitnehmerscheiben 24
- 39: Nabe
- 40: Antriebswellenaufnahme
- 41: Gruppe von drei Mitnehmerscheiben 24
- 42: Gruppe von vier Mitnehmerscheiben 24

## Patentansprüche

1. Vorrichtung (1) für eine landwirtschaftliche Maschine zur Förderung von Erntegütern unterschiedlichster Art, **gekennzeichnet durch** im Wesentlichen aus einer Mehrzahl distanzierter, auf einer Achse (17) oder einer Antriebswelle (27) angeordneter Mitnehmerscheiben (24), die einzelne Mitnehmer (7) umfassen, und/oder Gruppen (38, 41, 42) von jeweils miteinander verbundener, distanzierter Mitnehmerscheiben (24), die einzelne Mitnehmer (7) umfassen, wobei jede Gruppe (38, 41, 42) jeweils auf der Achse (17) oder der Antriebswelle (27) angeordnet ist.

2. Vorrichtung nach Anspruch 1, **dadurch gekennzeichnet, dass** die Mitnehmerscheiben (24) einer Gruppe (38, 41, 42) über eine Nabe (39) miteinander verbunden sind.

3. Vorrichtung nach Anspruch 1 oder 2, **dadurch gekennzeichnet, dass** die Mitnehmerscheiben (24) und die Gruppe (38, 41, 42) von Mitnehmerscheiben (24) starr ausgebildet sind und auf der Achse (17) oder der Antriebswelle (27) verdrehgesichert gelagert und antreibbar sind, insbesondere mit einer Überlastsicherung verdrehsicher gelagert sind.

4. Vorrichtung nach einem der vorangehenden Ansprüche, **dadurch gekennzeichnet, dass** die Mitnehmerscheibe (24) aus Stahl oder Federstahl oder Edelstahl oder Leichtmetall oder Kunststoff oder einem Verbundmaterial oder aus mindestens zwei unterschiedlichen Materialien bestehen.

5. Vorrichtung nach einem der vorangehenden Ansprüche, **dadurch gekennzeichnet, dass** der Grundkörper (12) der Mitnehmerscheibe (24) aus einem Material größerer Härte und die Mitnehmer (7) aus einem Material mit erhöhter Elastizität bestehen.

6. Vorrichtung nach einem der vorangehenden Ansprüche, **dadurch gekennzeichnet, dass** die Mitnehmerscheibe (24) aus einem Grundkörper (12) besteht, auf deren Umfang in einer mehrfachen Anzahl Mitnehmer (7) platziert sind, wobei jeweils zwischen zwei benachbarten Mitnehmern (7) ein Freiraum (36) vorhanden ist.

7. Vorrichtung nach einem der vorangehenden Ansprüche, **dadurch gekennzeichnet, dass** der Mitnehmer (7) einen Fuß (35) aufweist, von dessen Grund seitlich eine vordere Flanke (8) und eine hintere Flanke (5) in Drehrichtung (2) gesehen ausgehen, die sich in einer Mitnehmerspitze (4) zusammenschließen.

8. Vorrichtung nach einem der vorangehenden Ansprüche, **dadurch gekennzeichnet, dass** die vordere Flanke (8) und die hintere Flanke (5) im Wesentlichen gleich oder ungleich ausgebildet sind.

9. Vorrichtung nach einem der vorangehenden Ansprüche, **dadurch gekennzeichnet, dass** die Flanken (5) und (8) einen gebogenen oder geschwungenen oder geraden Verlauf aufweisen, insbesondere dass die vordere Flanke (8) einen konvexen und die hintere Flanke (5) einen geraden oder konkaven Verlauf aufweist.

10. Vorrichtung nach einem der vorangehenden Ansprüche, **dadurch gekennzeichnet, dass** sich zu einem Fußkreisdurchmesser (3) der Mitnehmerscheibe (24) gerichtet im Bereich der vorderen Flanke (8) eine Verstärkung (9) des Mitnehmers (7) erstreckt.

11. Vorrichtung nach einem der vorangehenden Ansprüche, **dadurch gekennzeichnet, dass** benachbart auf der Achse (17) oder der Antriebswelle (27) angeordnete Mitnehmerscheiben (24) so montiert sind, dass die Mitnehmer (7) gleich oder versetzt zueinander angeordnet sind, insbesondere die Mitnehmer (7) seitlich verschränkt sind.

12. Vorrichtung nach einem der vorangehenden Ansprüche, **dadurch gekennzeichnet, dass** die Achse (17) oder die Antriebswelle (27) bestückt mit Mitnehmerscheiben (24) horizontal oder vertikal einsetzbar ist.

13. Vorrichtung nach einem der vorangehenden Ansprüche, **dadurch gekennzeichnet, dass** zwischen den Mitnehmerscheiben (24) Abstreifer (18, 28) angeordnet sind.

14. Vorrichtung nach einem der vorangehenden Ansprüche, **dadurch gekennzeichnet, dass** die Achse (17) oder die Antriebswelle (27) hydraulische, mechanisch oder elektrisch angetrieben wird.

15. Landwirtschaftliche Maschine, ausgestattet mit einer Vorrichtung der vorgenannten Art, ausgebildet als Schwader oder Bandschwader oder Heuwerbungsmaschine oder Fahrgassenräumer oder Schwadräumer oder dergleichen.
